# EUROPEAN PATENT APPLICATION

(11) **EP 0 818 874 A1**
(43) Date of publication of application: **14.01.1998**
(21) Application number: 97110542.4
(22) Date of filing: 27.06.1997
(51) Int. Cl.: H02K 15/06, H02K 15/04, H02K 3/28

(54) **Apparatus and methods for forming and inserting multi-lobed coils constituting the stator winding of an alternator**

(30) Priority: 28.06.1996 IT TO960554
(71) Applicant: Polytool Srl, 10090 Cascine Vica - Rivoli (Torino) (IT)
(72) Inventor: Barrera, Giorgio, 10096 Leumann - Collegno, (Torino) (IT)
(74) Representative: Notaro, Giancarlo

(57) **Abstract**

Apparatus (10) and methods are presented for forming and inserting multi-lobed coils into slots (3) of a stator for an alternator, the coils constituting the winding of the stator. The apparatus includes first and second coiling stations (A,B) and a coil inserting station (C). The first and second coiling stations form and load, either sequentially or independently, a coil-inserting tool (14) with first and second multi-lobed semi-coils (4a,4b) angularly offset from each other by approximately one half-wave such that the lobes (9) of one semi-coil (4b) are located in the spaces between the lobes (8) of the other semi-coil (4a). The coil-inserting tool (14) is then transferred to the coil inserting station (C) where the first and second semi-coils (4a,4b) are substantially simultaneously inserted into at least some slots (3) of a stator, each engaged slot receiving a portion of both first and second semi-coils.

## Description

The present invention relates to apparatus and methods for forming and inserting multi-lobed coils into slots of a stator, the coils constituting the stator winding. The stator is of a type commonly used in an alternator in which at least some slots of the stator receive portions of two separate semi-coils angularly offset from each other by approximately one half-wave such that the lobes of one semi-coil are located in the spaces between the lobes of the other semi-coil.

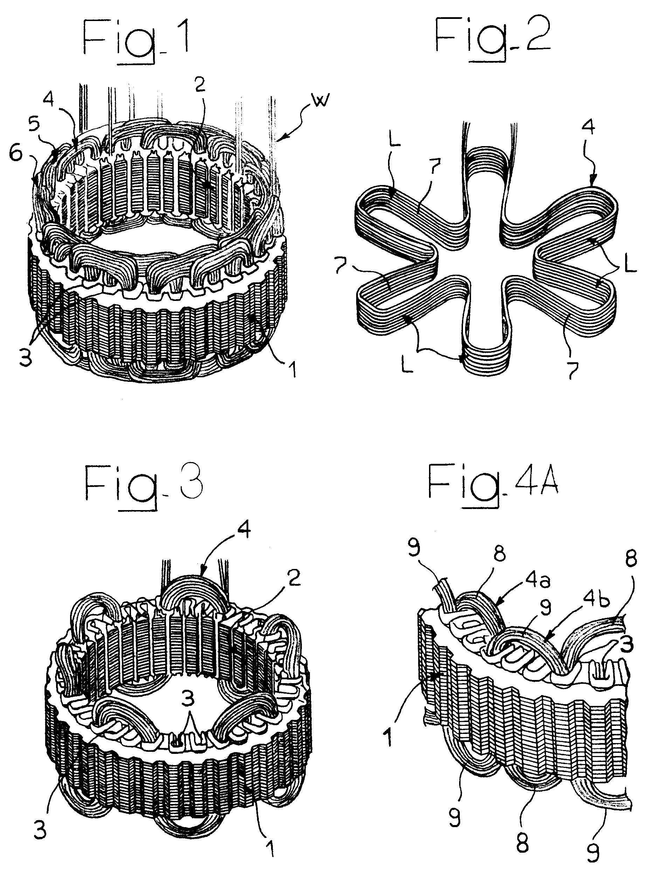

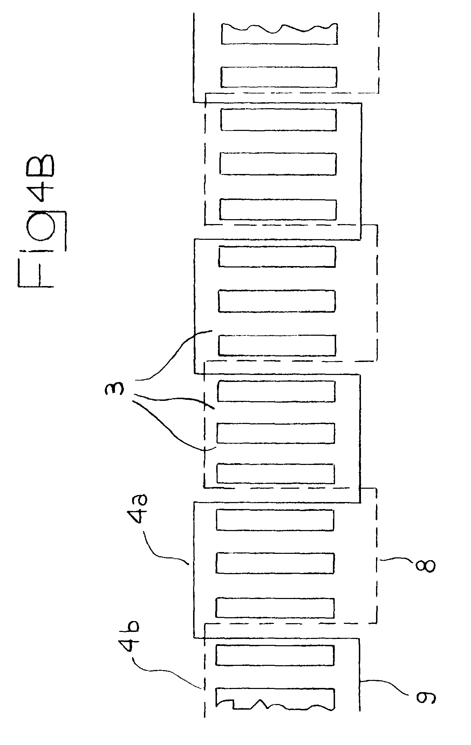

FIG. 1 is a perspective view of a known stator of a dynamo-electric machine. The stator includes an annular body 1 having a laminated structure with an inner cylindrical surface 2 and a plurality of axial slots 3 formed equiangularly apart from each other. The winding W of the stator includes three copper wire coils 4, 5 and 6, each having the multi-lobed shape of coil 4 of FIG. 2 shown before insertion into slots 3 of the stator. Coil 4 has a plurality of lobes L which are equiangularly spaced apart from each other. A stator inserted with a single coil 4 is shown in FIG. 3. After insertion, lobes L of the coil are located on a theoretical cylindrical surface, with side portions 7 inserted into respective slots 3 of the stator.

Multi-lobed coils 4, 5 and 6 may be formed and inserted with known apparatus, such as, for example, that described in US Patent No. 4,512,376, issued to the same inventor of the present invention. With this known apparatus, undulated coils of the type shown in FIG. 2 can be formed and inserted into slots of a stator.

Currently, a need exists for providing stators that can be used in alternators, particularly for automotive use. In such stators, coils 4, 5 and 6 are each usually replaced with two semi-coils angularly offset from each other by approximately one half-wave such that the lobes of one semi-coil are located in the spaces between the lobes of the other semi-coil. Each slot of the stator accordingly engages two portions 7, each portion 7 forming part of a separate semi-coil. This arrangement is shown in FIGS. 4A and 4B.

FIG. 4A is a partial perspective view of a stator having one pair of semi-coils 4a and 4b with respective lobes 8 and 9. Semi-coils 4a and 4b constitute one phase of the stator's winding (which typically has three), and are angularly offset from each other by approximately one half-wave such that each lobe 8 is located in the space between two adjacent lobes 9, and each engaged slot 3 is inserted with one portion of semi-coil 4a and one portion of semi-coil 4b. FIG. 4B is a simplified diagram of a stator laid out in a plane with semi-coils 4a and 4b inserted in some slots 3.

Known apparatus of this type described in U.S. Patent No. 4,512,376 pertains only generally to forming and inserting multi-lobed coils for stators of dynamo-electric machines. Thus, there is no teaching, or even a remote suggestion, of apparatus or methods for forming two semi-coils angularly offset from each other by approximately one half-wave such that the lobes of one semi-coil are located in the spaces between the lobes of the other semi-coil. Nor is there a teaching or suggestion of apparatus or methods for inserting respective portions of such angularly offset semi-coils into the same slots of a stator.

In view of the foregoing, it would be desirable to provide apparatus and methods for forming and inserting into slots of a stator for an alternator multi-lobed semi-coils angularly offset from each other by approximately one half-wave such that the lobes of one semi-coil are located in the spaces between the lobes of the other semi-coil.

It would also be desirable to provide apparatus and methods that are simple, efficient, and reliable for forming and inserting into slots of a stator for an alternator multi-lobed semi-coils angularly offset from each other by approximately one half-wave such that the lobes of one semi-coil are located in the spaces between the lobes of the other semi-coil.

It is an object of this invention to provide apparatus and methods for forming and inserting into slots of a stator for an alternator multi-lobed semi-coils angularly offset from each other by approximately one half-wave such that the lobes of one semi-coil are located in the spaces between the lobes of the other semi-coil.

It is also an object of this invention to provide apparatus and methods that are simple, efficient, and reliable for forming and inserting into slots of a stator for an alternator multi-lobed semi-coils angularly offset from each other by approximately one half-wave such that the lobes of one semi-coil are located in the spaces between the lobes of the other semi-coil.

In accordance with this invention, there is provided apparatus for forming and inserting multi-lobed coils into slots of a stator, the coils constituting the winding of the stator. The apparatus includes a first coiling station for forming and loading at least one multi-lobed semi-coil onto a coil-inserting tool, a second coiling station for forming and loading at least one multi-lobed semi-coil onto a coil-inserting tool, an inserting station for inserting semi-coils into at least some slots of a stator, and means for transferring a coil-inserting tool from each station to at least one other station.

The above and other objects and advantages of the invention will be apparent upon consideration of the following detailed description, taken in conjunction with the accompanying drawings, in which like reference characters refer to like parts throughout, and in which:
FIG. **1** is a perspective view of a stator of a dynamo-electric machine;
FIG. **2** is a perspective view of a coil that forms part of the winding of the stator of FIG. 1 before insertion into the stator;
FIG. **3** is a perspective view of the stator of FIG. 1 with the coil of FIG. 2 inserted therein;
FIG. **4A** is a partial perspective view of an alternator stator for a motor vehicle with a pair of semi-coils according to the present invention;
FIG. **4B** is a simplified diagram of the stator and coils of FIG. 4A laid out in a plane;
FIG. **5** is an elevational view of an exemplary embodiment of apparatus according to the present invention;
FIG. **6** is a plan view of the apparatus of FIG. 5; and
FIG. **7** is a cross-sectional view of the apparatus of FIG. 5 taken from line VII-VII of FIG. 5.

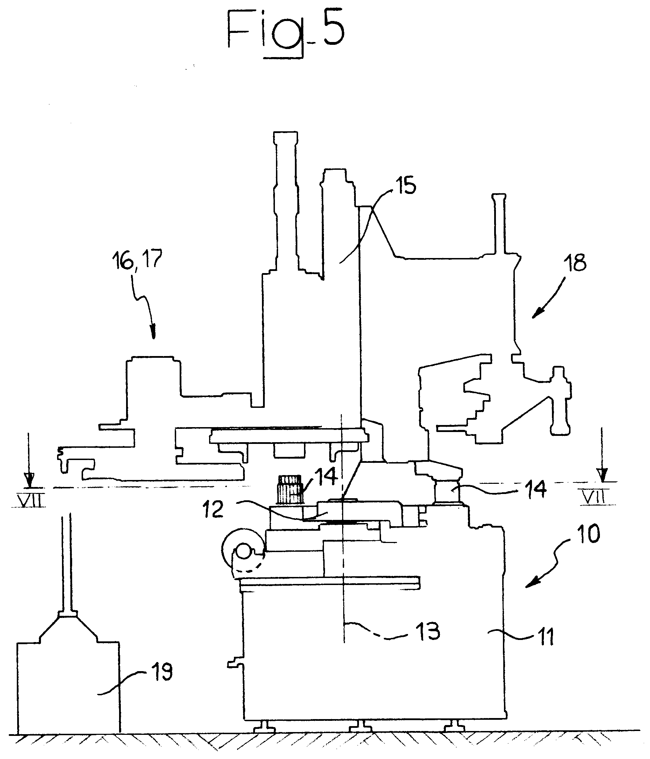

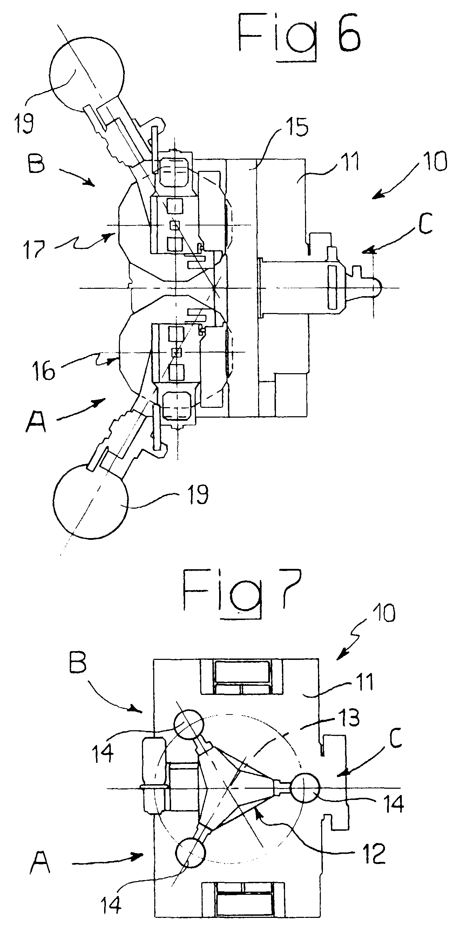

An exemplary embodiment of apparatus is shown in FIGS. 5-7, in accordance with the principles of the present invention. Apparatus 10 includes a base structure 11 that supports a rotatable platform 12. Rotatable platform 12 supports three coil-inserting tools 14 positioned at stations A, B and C, respectively. Motor means (known in the art and not shown) is provided within base structure 11 to drive rotatable platform 12 about a vertical axis 13 to substantially simultaneously transfer the coil-inserting tool 14 at station A to station B, the coil-inserting tool 14 at station B to station C, and the coil-inserting tool 14 at station C to station A.

Coil-inserting tools 14 are known in the art and may be of the type shown, for example, in U.S. Patent No. 3,324,536. Such coil-inserting tools are loaded with one or more multi-lobed coils and are then positioned to insert those coils into slots of a stator.

Apparatus 10 further includes an upright 15 which extends upwardly from base structure 11. Upright 15 supports winding heads 16 and 17 and an inserting device 18. Winding heads 16 and 17 are identical and respectively located at stations A and B, while inserting device 18 is located at station C. Stations A and B are coiling stations and station C is an inserting station.

Winding heads 16 and 17 are known in the art and may be of the type shown, for example, in U.S. Patent No. 4,512,376, which is incorporated by reference herein. Winding heads 16 and 17 are each supplied with a copper wire provided by a reel of wire (not shown) located within container 19 to form multi-lobed coils having configuration as shown in FIG. 2. Winding heads 16 and 17 further load these coils onto coil-inserting tools 14.

Inserting device 18 is also known in the art and includes any device at which a stator can be positioned on a coil-inserting tool 14 to enable the coil-inserting tool, which was previously loaded with semi-coils, to insert those semi-coils into the slots of the stator.

Apparatus 10 operates typically as follows: an empty coil-inserting tool 14 is transferred to station A from inserting station C, where coils previously loaded onto the coil-inserting tool 14 were inserted into at least some slots of a stator. At station A, winding head 16 forms a semi-coil (e.g., semi-coil 4a or 4b of FIGS. 4A and 4B) having the configuration shown in FIG. 2. Winding head 16 then loads this semi-coil onto the empty coil-inserting tool 14. Substantially simultaneously, the coil-inserting tool at station B, which was previously loaded with a first semi-coil at coiling station A, is loaded with a second semi-coil angularly offset from the first by approximately one half-wave. Also substantially simultaneously, the coil-inserting tool at inserting station C, which was previously loaded with angularly offset semi-coils formed and loaded at coiling stations A and B, respectively, inserts the angularly offset semi-coils into at least some slots of a stator positioned at station C, each engaged slot receiving portions of both semi-coils. (Typically a third of the slots are inserted with semi-coils if the semi-coils constitute one phase of a three phase stator winding.)

Rotatable platform 12 then rotates such that the coil-inserting tool 14 at coiling station A is transferred to coiling station B, the coil-inserting tool 14 at coiling station B is transferred to inserting station C, and the coil-inserting tool 14 at inserting station C is transferred to coiling station A. Thus the coil-inserting tool 14 that was loaded with a first semi-coil at coiling station A can now be loaded with a second semi-coil at coiling station B, the second semi-coil being angularly offset from the first by approximately one half-wave. The coil-inserting tool 14 that was loaded with a second semi-coil angularly offset from the first semi-coil at coiling station B can now insert its coils into some of the slots of a stator at inserting station C, and the coil-inserting tool 14 that inserted its coils into some of the slots of a stator at inserting station C can now be loaded with another first semi-coil at coiling station A. Rotatable platform 12 then rotates similarly again to complete an operational cycle.

A stator either remains at inserting station C until all pairs of semi-coils (i.e., phases) are inserted, or is transferred to another apparatus 10 to receive another phase of its winding. In either case, the stator is replaced with another stator to be inserted with coils.

Advantageously, coil inserting station C may alternatively receive coil-inserting tools 14 loaded with angularly offset pairs of semi-coils directly from either first coiling station A or second coiling station B. This enhanced versatility permits apparatus 10 to continue production should one of the coiling stations malfunction. Preferably, coiling stations A and B each form and load onto respective coil-inserting tools 14 two semi-coils angularly offset from each other by approximately one half-wave such that the lobes of one semi-coil are located in the spaces between the lobes of the other semi-coil.

Transferring means preferably transfers loaded coil-inserting tools 14 from either coiling station A or B directly to inserting station C. For example, to transfer a coil-inserting tool 14 from coiling station A directly to inserting station C, rotatable platform 12 merely rotates in a direction opposite that for transferring a coil-inserting tool 14 from coiling station A to coiling station B. Moreover, while transferring coil-inserting tool 14 from coiling station A to inserting station C, an empty coil-inserting tool 14 from inserting station C is substantially simultaneously transferred to coiling station B. Transferring coil-inserting tools 14 from coiling station B to inserting station C, while also transferring empty coil-inserting tools 14 from inserting station C to coiling station A, are performed in the same manner as described above for typical operation. Apparatus 10 can therefore be advantageously operated with either coiling stations A and B working together to form and load angularly offset pairs of semi-coils onto coil-inserting tools, or independently, where each separately forms and loads a pair of angularly offset semi-coils onto a respective coil-inserting tool.

Means for transferring coil-inserting tools 14 from station to station can alternatively be provided by other than rotatable platform 12 and the motor means described above. For example, transferring means may include, similar to what is provided in our Italian Patent Application TO96A000555, filed June 28, 1996, which is incorporated by reference herein, a transfer station located centrally between the coiling and inserting stations, and exchange means interposed between each of the coiling and inserting stations and the transfer station. Exchange means exchanges a coil-inserting tool 14 at each of the coiling and inserting stations with a coil-inserting tool 14 at the transfer station.

To form and insert a pair of angularly offset semi-coils into a stator, the alternative transferring means may operate, for example, as follows: exchange means exchanges a first coil-inserting tool 14 loaded with a first semi-coil at coiling station A with an empty coil-inserting tool 14 at transfer station. The first coil-inserting tool 14, now at the transfer station, is then exchanged with a coil-inserting tool 14 at coiling station B. At coiling station B, the first coil-inserting tool 14 is loaded with a second semi-coil, formed at coiling station B, such that the second semi-coil is angularly offset from the first semi-coil by approximately one half-wave. The first coil-inserting tool 14 is then exchanged with a coil-inserting tool 14 at the transfer station. From the transfer station, the first coil-inserting tool 14 is exchanged with a coil-inserting tool 14 at inserting station C. At inserting station C, the first coil-inserting tool 14 inserts the first and second semi-coils into at least some slots of a stator. Exchange means then transfers the first coil-inserting tool 14 back to coiling station A via the transfer station. Thus alternative transferring means can be used to produce alternator stators with windings constituted by pairs of angularly offset multi-lobed semi-coils.

In addition, the transfer station and exchange means can also be used when coiling station A and B operate independently. A coil-inserting tool loaded at coiling station A is transferred to the transfer station, where, instead of then being transferred to coiling station B, it is transferred to inserting station C. Similarly, a coil-inserting tool loaded with a pair of angularly offset semi-coils at coiling station B is transferred to the transfer station and then to coil-inserting station C via the transfer station.

Thus it is seen that apparatus and methods are presented for forming and loading onto a coil-inserting tool multi-lobed semi-coils angularly offset from each other by approximately one half-wave such that the lobes of one semi-coil are located in the spaces between the lobes of the other semi-coil, and for inserting those coils into at least some slots of a stator for an alternator. Persons skilled in the art will appreciate that the present invention can be practiced by other than the described embodiments, which are presented for purposes of illustration and not of limitation, and the present invention is limited only by the claims which follow.

## Claims

1. An apparatus for forming and inserting multi-lobed coils into slots of a stator of an alternator, said coils constituting the winding of said stator, said stator being of a type in which at least some of said slots of said stator receive portions of two separate semi-coils, angularly offset from each other by approximately one half-wave such that the lobes of one semi-coil are located in the spaces between the lobes of the other semi-coil, said apparatus comprising:
a first coiling station for forming at least one multi-lobed semi-coil and for loading said at least one semi-coil onto a coil-inserting tool;
a second coiling station for forming at least one multi-lobed semi-coil and for loading said at least one semi-coil onto a coil-inserting tool;
a coil inserting station for inserting semi-coils from a coil-inserting tool into at least some slots of a stator; and
means for transferring a coil-inserting tool from each of said stations to at least one other of said stations.

2. The apparatus of claim 1 wherein said first coiling station forms and loads onto coil-inserting tool a first multi-lobed semi-coil and said second coiling station forms and loads onto said coil-inserting tool a second multi-lobed semi-coil, said first and second semi-coils being angularly offset from each other by approximately one half-wave such that the lobes of one semi-coil are located in the spaces between the lobes of the other semi-coil.

3. The apparatus of claim 2 wherein said inserting station inserts substantially simultaneously said first and second semi-coils into at least some slots of a stator, said at least some slots receiving portions of both said first and second semi-coils.

4. The apparatus of claim 1 wherein said first coiling station forms and loads onto a coil-inserting tool first and second multi-lobed semi-coils, said first and second semi-coils being angularly offset from each other by approximately one half-wave such that the lobes of one semi-coil are located in the spaces between the lobes of the other semi-coil.

5. The apparatus of claim 4 wherein said inserting station inserts substantially simultaneously said first and second semi-coils into at least some slots of a stator, said at least some slots receiving portions of both said first and second semi-coils.

6. The apparatus of claim 1 wherein said second coiling station forms and loads onto a coil-inserting tool first and second multi-lobed semi-coils, said first and second semi-coils being angularly offset from each other by approximately one half-wave such that the lobes of one semi-coil are located in the spaces between the lobes of the other semi-coil.

7. The apparatus of claim 6 wherein said inserting station inserts substantially simultaneously said first and second semi-coils into at least some slots of a stator, said at least some slots receiving portions of both said first and second semi-coils.

8. The apparatus of claim 1 wherein said transferring means comprises a platform rotatable about a vertical axis.

9. The apparatus of claim 1 wherein said transporting means sequentially transfers a coil-inserting tool from said inserting station to said first coiling station, from said first coiling station to said second coiling station, and from said second coiling station to said inserting station.

10. The apparatus of claim 1 wherein said transporting means substantially simultaneously transfers a first coil-inserting tool from said inserting station to said first coiling station, a second coil-inserting tool from said first coiling station to said second coiling station, and a third coil-inserting tool from said second coiling station to said inserting station.

11. The apparatus of claim 1 wherein said transporting means transfers a coil-inserting tool from said first coiling station to said inserting station and a second coil-inserting tool from said second coiling station to said inserting station.

12. The apparatus of claim 1 wherein said transporting means comprises:
a transfer station centrally located between said inserting station and said first and second coiling stations; and
exchange means interposed between each of said coiling and inserting stations and said transfer station.

13. A method of forming multi-lobed coils for use as the winding of a stator for an alternator and for inserting said coils into at least some slots of said stator, said stator being of a type in which at least some of said slots receive portions of two separate semi-coils angularly offset from each other by approximately one half-wave such that the lobes of one semi-coil are located in the spaces between the lobes of the other semi-coil, said method comprising the steps of:
forming at least one multi-lobed semi-coil at a first coiling station;
loading said at least one semi-coil formed at said first coiling station onto a coil-inserting tool at said first coiling station;
forming at least one multi-lobed semi-coil at a second coiling station;
loading said at least one semi-coil formed at said second coiling station onto a coil-inserting tool at said second coiling station;
transferring a coil-inserting tool loaded with first and second semi-coils to an inserting station, said first and second semi-coils being angularly offset from each other by approximately one half-wave such that the lobes of one semi-coil are located in the spaces between the lobes of the other semi-coil; and
inserting substantially simoultaneously said first and second semi-coils into at least some slots of said stator positioned at said inserting station, such that said at least some slots receive portions of both said first and second semi-coils.

14. The method of claim 13 wherein the steps of forming and loading at least one multi-lobed semi-coil, at a first coiling station comprise the steps of forming a first and second multi-lobed semi-coil at said first coiling station and loading said first and second multi-lobed semi-coils onto a coil-inserting tool at said first coiling station, said first and second semi-coils being angularly offset from each other by approximately one half-wave such that the lobes of one semi-coil are located in the spaces between the lobes of the other semi-coil, and wherein the step of transferring comprises the step of transferring said coil-inserting tool from said first coiling station to said inserting station.

15. The method of claim 13 wherein the steps of forming and loading at least one multi-lobed semi-coil, at a second coiling station comprise the steps of forming a first and second multi-lobed semi-coil at said second coiling station and loading said first and second multi-lobed semi-coils onto a coil-inserting tool at said second coiling station, said first and second semi-coils being angularly offset from each other by approximately one half-wave such that the lobes of one semi-coil are located in the spaces between the lobes of the other semi-coil, and wherein the step of transferring comprises the step of transferring said coil-inserting tool from said second coiling station to said inserting station.

16. A method of forming multi-lobed coils for use as the winding of a stator for an alternator and of inserting said coils into at least some slots of said stator, said stator being of a type in which at least some of said slots receive portions of two separate semi-coils angularly offset from each other by approximately one half-wave such that the lobes of one semi-coil are located in the spaces between the lobes of the other semi-coil, said method comprising the steps of:
forming a first multi-lobed semi-coil at a first coiling station;
loading said first semi-coil onto a coil-inserting tool at said first coiling station;
transferring said coil-inserting tool from said first coiling station to a second coiling station;
forming a second multi-lobed semi-coil at said second coiling station;
loading said second semi-coil onto said coil-inserting tool at said second coiling station, said first and second multi-lobed semi-coils being angularly offset from each other by approximately one half-wave such that the lobes of one semi-coil are located in the spaces between the lobes of the other semi-coil;
transferring said coil-inserting tool to an inserting station;
inserting substantially simultaneously said first and second semi-coils into at least some slots of said stator positioned at said inserting station such that said at least some slots receive portions of both said first and second semi-coils.

17. The method of claim 16 comprising the additional step of:
transferring an empty coil-inserting tool from said inserting station to said first coiling station.

18. The method of claim 16 wherein said step of transferring said coil-inserting tool from said first coiling station to a second coiling station comprises the additional step of:
transferring an empty coil-inserting tool from said inserting station to said first coiling station; and
transferring a coil-inserting tool loaded with third and fourth multi-lobed semi-coils from said second coiling station to said inserting station, said third and fourth multi-lobed semi-coils being angularly offset from each other by approximately one half-wave such that the lobes of one semi-coil are located in the spaces between the lobes of the other semi-coil.

19. The method of claim 16 wherein said step of transferring said coil-inserting tool from said second coiling station to an inserting station comprises the additional step of:
transferring an empty coil-inserting tool from said inserting station to said first coiling station; and
transferring a coil-inserting tool loaded with a fifth multi-lobed semi-coils from said first coiling station to said second coiling station.
